# EUROPEAN PATENT APPLICATION

(11) **EP 3 382 708 A1**
(43) Date of publication of application: **03.10.2018**
(21) Application number: 18163241.5
(22) Date of filing: 22.03.2018
(51) Int. Cl.: G11B 33/04

(54) **PACKAGE OF THE BOOKLET TYPE FOR OPTICAL DISCS**

(30) Priority: 27.03.2017 IT 201700033037
(71) Applicant: Pozzoli S.p.A., 20065 Inzago (IT)
(72) Inventor: POZZOLI, Aldo, 20065 INZAGO MI (IT)
(74) Representative: Modiano, Micaela Nadia

(57) **Abstract**

A package (1) of the booklet type for optical discs such as CDs, DVDs, Blu-rays and the like, comprising a cover (2) which encloses at least one pocket (3) for containing a respective optical disc (4) and optionally a booklet-like body (5), wherein the at least one pocket has, on an edge (31) that lies opposite an open edge (32) suitable for the insertion of the optical disc (4) in the pocket, a central slit (33), a distance between the open edge (32) and the opposite edge (31) being less than the diameter of the optical disc (4), so that the optical disc can protrude from the central slit (33); the portion (34, 35) of the internal surface of the at least one pocket (3) on which the optical disc (4) rests when it is in the pocket (3) has no surface discontinuities such as edges or the like.

## Description

The present invention relates to a package of the booklet type for optical discs such as CDs, DVDs, Blu-rays and the like.

These packages typically have a book-like structure with a typically rigid cover onto which one or more pockets for accommodating optical discs are fixed through the flyleaves and are fixed onto a flyleaf sheet integrally or along one edge. Descriptive and/or illustrated pages can optionally be present in this package.

A package of this type is known, for example, from EP0952582 and is particularly suitable to be inserted in anti-theft devices, since the pockets for containing the optical discs are provided with a slit on the edge that is opposite to the one from which the disc is inserted, allowing to limit the dimension of the short side of the package, making the package suitable to be contained in the anti-theft devices usually used for traditional jewel cases.

One drawback of the known package just mentioned is that the pockets for containing the optical disc, which are provided starting from a die-cut element made of folded cardboard, are provided internally with an edge that is derived from a rectangular flap which is meant to delimit laterally the pocket on the opposite side with respect to the side where the cardboard is folded and is in relief inside the pocket along the initial insertion portion.

This edge might scratch, albeit minimally, the surface of the optical disc, in particular in the case of a Blu-ray disc.

The aim of the present invention is to provide a package for optical discs that is capable of improving the background art in one or more of the aspects indicated above.

Within this aim, an object of the invention is to provide a package for optical discs, particularly of the booklet type and suitable to be inserted in an anti-theft device for jewel cases, which reduces or eliminates the risk of scratching the recorded surface of the optical discs contained therein.

Furthermore, an object of the present invention is to overcome the drawbacks of the background art in a manner which is alternative to any existing solutions.

A still further object of the invention is to provide a package for optical discs that is highly reliable, relatively easy to provide and at competitive costs.

This aim and these and other objects which will become better apparent hereinafter are achieved by a package according to claim 1, optionally provided with one or more of the characteristics of the dependent claims.

Further characteristics and advantages of the invention will become better apparent from the description of a preferred but not exclusive embodiment of the package according to the invention, illustrated by way of non-limiting example in the accompanying drawings, wherein:

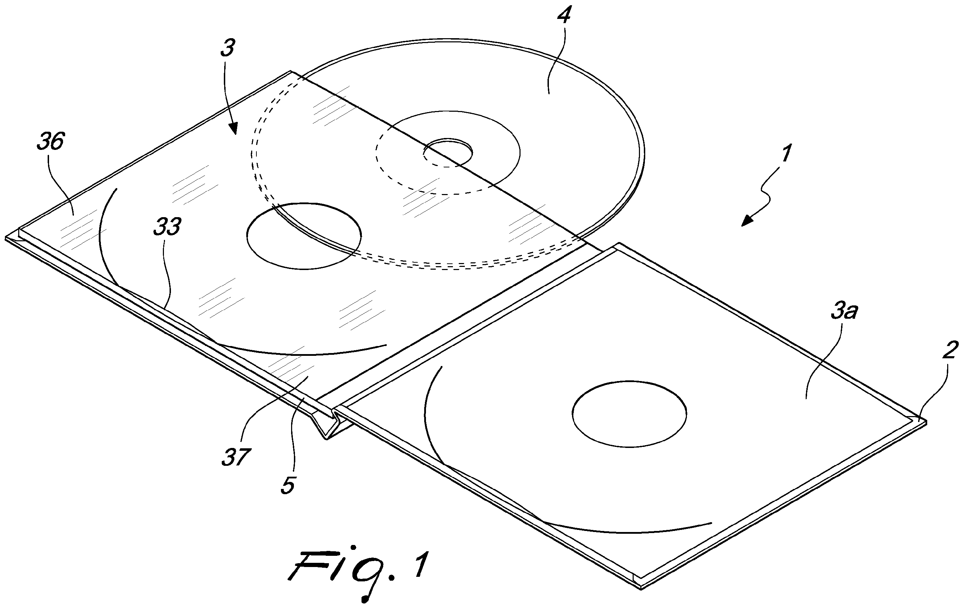

Figure 1 is a view of a package according to the invention;

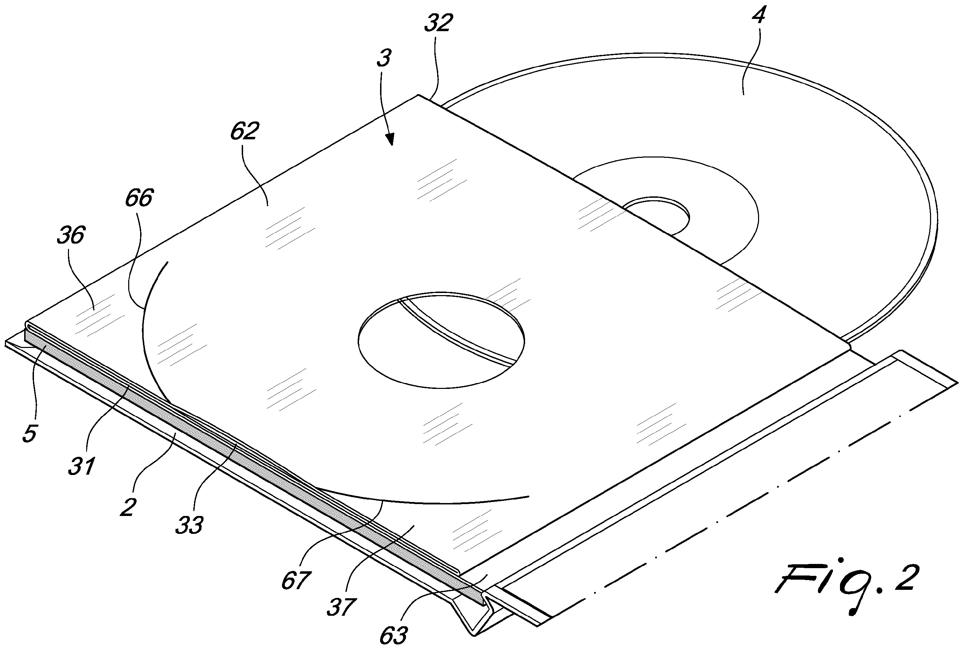

Figure 2 is a detail view of the preceding figure;

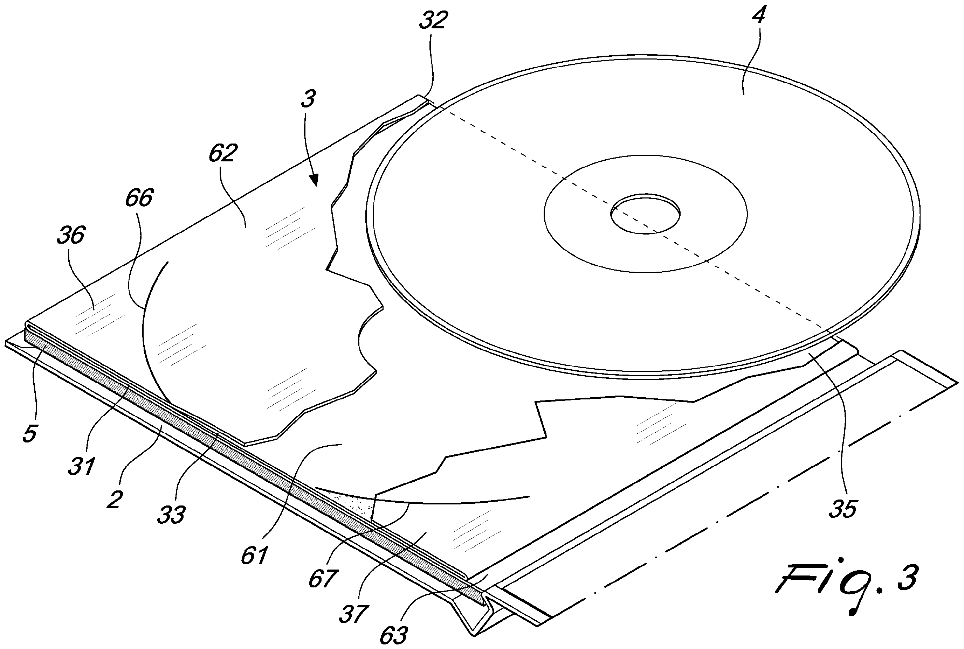

Figure 3 is a partial cutout view of the package of the preceding figure;
Figure 4 is a view of the die-cut element and of the pasting regions for providing the optical disc holder pocket of the preceding figures;

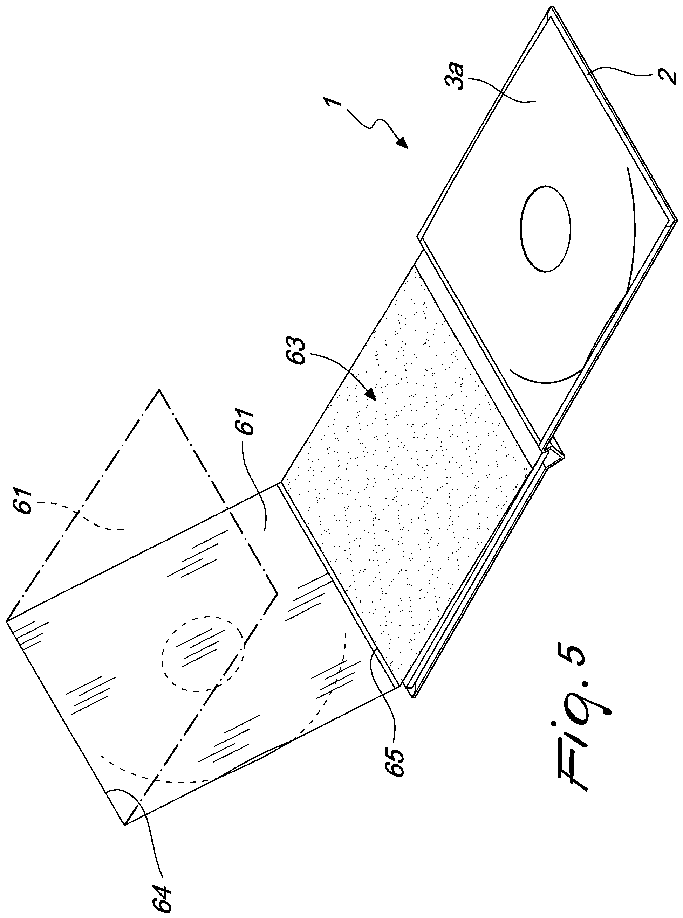

Figure 5 is a view of the die-cut element after a first folding operation which forms the disc holder pocket.

With reference to the cited figures, a package for optical discs such as CDs, DVDs, Blu-rays and the like according to the invention, generally designated by the reference numeral 1, is of the hardcover booklet type and comprises a preferably rigid cover 2 which encloses one or more pockets 3 for containing a respective optical disc 4 and any descriptive and/or illustrated pages 5.

The pockets 3 and the pages 5, if any, are fixed to the cover with traditional bookbinding methods, for example by pasting them to a single flyleaf sheet which is pasted at both cover quadrants. Like in books, the cover 3 protrudes slightly with respect to the pockets.

In the illustrated example, the pocket 3 is fixed to the cover 2 along one edge, as if it were a page of a booklet, but it might instead be fixed integrally to the cover like the pocket 3a.

The pocket 3 has, on the edge 31 that lies opposite the open edge 32 suitable for the insertion of the optical disc 4 in the pocket, a central slit 33. The distance between the open edge 32 and the opposite edge 31 is less than the diameter of the optical disc 4, so that the optical disc 4 can protrude slightly from the central slit 33. In this manner it is possible to reduce the dimension of the short side of the package 1 and render the package insertable in anti-theft devices for traditional jewel case packages.

A particularity of the invention is that the portion of the internal surface 34-35 of the pocket 3 on which the optical disc 4 rests when it is in the pocket 3 has no surface discontinuities such as edges or the like.

In particular, the pocket 3 comprises a rectangular die-cut element 6 made of cardboard which is folded onto itself along one or more folding lines 64, 65 so that the flat faces 34-35 of the folded die-cut element 6 that constitute the internal surface of the pocket have substantially mutually identical areas.

In the illustrated embodiment, the folding of the die-cut element 6 is a so-called "letter" or "tri-fold" or "U-shaped" folding. In particular, the die-cut element 6 comprises at least two folding lines 64-65 which divide it into at least three quadrants 61, 62 and 63 having substantially the same area and mutually superimposed by mutual folding of a first end quadrant 61 onto a second intermediate quadrant 62 and of a third end quadrant 63 onto the folded assembly of the first and second quadrants 61-62. A layer of glue is interposed between the third quadrant 63 and the first quadrant 61 folded onto the second quadrant 62.

The optical disc 4 is then accommodated between the first and second quadrants 61-62, which have a width that is substantially equal to the diameter of the optical disc 4. The internal surface of the pocket 3 is therefore constituted exclusively by the faces of the quadrants 61 and 62 and there are no intermediate fixing flaps. The lateral containment edges of the optical disc are in fact constituted by the folding lines 64 and 65, without having to resort to a flap that protrudes laterally from the die-cut element as occurs in EP0952582.

Advantageously, laterally adjacent to the central slit 33 there are corner regions 36-37 in which the internal faces of the pocket 3 are mutually fixed and delimit the receptacle 34-35 of the optical disc i.e. the portion of the internal surface of the pocket 3 on which the optical disc 4 rests when it is accommodated in the package.

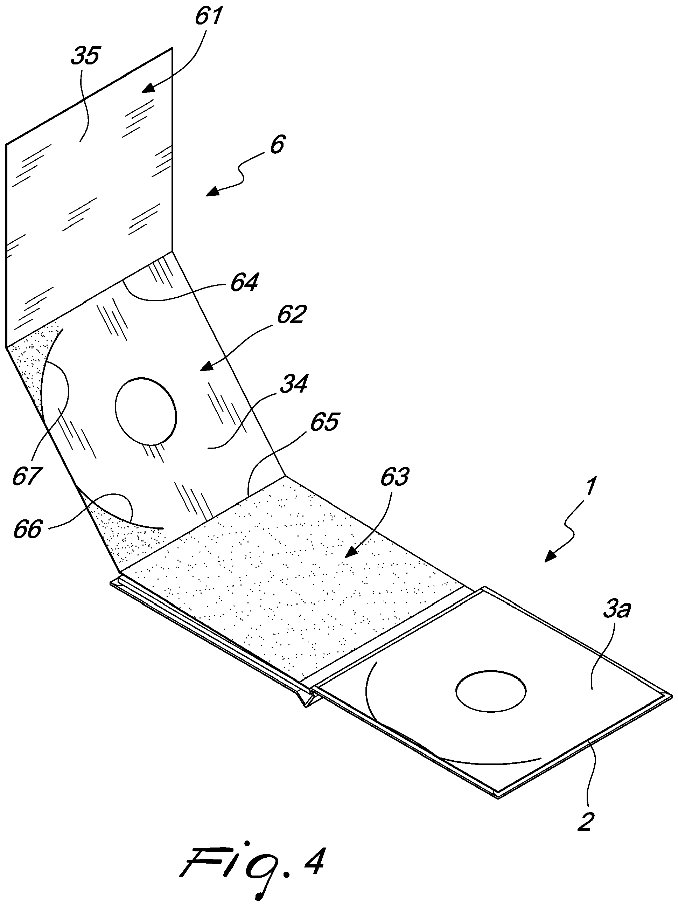

These corner regions are delimited by arc-like die-cuts and/or creases 66-67 which are arranged laterally adjacent to the central slit 33. The internal part of the corner regions can optionally be covered at least partially with glue, as shown in Figure 4.

In practice it has been found that the invention achieves the intended aim and objects, providing a package for optical discs that does not risk scratching, albeit minimally, the surface of the optical disc.

The invention thus conceived is susceptible of numerous modifications and variations, all of which are within the scope of the appended claims; furthermore, all the details may be replaced with other technically equivalent elements.

In practice, the materials used, as well as the contingent shapes and dimensions, may be any according to the requirements and the state of the art.

The disclosures in Italian Patent Application No. 102017000033037 (UA2017A002052) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A package (1) of the booklet type for optical discs such as CDs, DVDs, Blu-rays and the like, comprising a cover (2) which encloses at least one pocket (3) for containing a respective optical disc (4) and optionally pages (5), wherein said at least one pocket has, on an edge (31) that lies opposite an open edge (32) suitable for the insertion of the optical disc (4) in the pocket, a central slit (33), a distance between said open edge (32) and said opposite edge (31) being less than a diameter of the optical disc (4), so that said optical disc can protrude from said central slit (33), **characterized in that** the portion (34, 35) of the internal surface of said at least one pocket (3) on which said optical disc (4) rests when it is in the pocket (3) has no surface discontinuities such as edges or the like.

2. The package according to claim 1, wherein said at least one pocket (3) comprises a rectangular die-cut element (6) made of cardboard which is folded onto itself along one or more folding lines (64, 65) so that the faces of the folded cardboard that constitute said internal surface of the pocket have substantially mutually identical areas.

3. The package according to claim 2, wherein said die-cut element (6) comprises at least two folding lines (64, 65) which divide said die-cut element into at least three quadrants (61, 62, 63) having substantially the same area and mutually superimposed by mutual folding of a first end quadrant (61) onto a second intermediate quadrant (62) and of a third end quadrant (63) onto the folded assembly of the first and second quadrants, said optical disc (4) being accommodatable between said first and second quadrants (61, 62), which have a width that is substantially equal to the diameter of the optical disc (4).

4. The package according to claim 3, wherein a layer of glue is interposed between said third end quadrant (63) and said first quadrant (61).

5. The package according to one or more of the preceding claims, wherein said at least one pocket (3) is rotatably connected to said cover at an edge of said at least one pocket.

6. The package according to one or more of the preceding claims, **characterized in that** it comprises, laterally adjacent to said central slit (33), corner regions (36, 37) in which the internal faces of said at least one pocket (3) are mutually fixed and delimit the receptacle of the optical disc.

7. The package according to one or more of the preceding claims, **characterized in that** it comprises, laterally adjacent to said central slit (33), arc-like die-cuts or creases (66, 67) which delimit the receptacle of the optical disc.

8. The package according to one or more of the preceding claims, **characterized in that** said cover protrudes with respect to said at least one pocket.
